(19) Europäisches Patentamt
European Patent Office
Office européen des brevets

(11) **EP 1 982 150 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(51) Int Cl.:
**G01D 11/30** *(2006.01)*　　**F16M 11/10** *(2006.01)*
**G01F 23/284** *(2006.01)*　　**G01F 23/296** *(2006.01)*
**F16M 13/02** *(2006.01)*

(21) Anmeldenummer: **07703003.9**

(22) Anmeldetag: **24.01.2007**

(86) Internationale Anmeldenummer:
**PCT/EP2007/000598**

(87) Internationale Veröffentlichungsnummer:
**WO 2007/090518 (16.08.2007 Gazette 2007/33)**

(54) **FELDGERÄT MIT EINER MONTAGEKLAMMER ZUR BEFESTIGUNG AN EINER BEFESTIGUNGSFLÄCHE**

FIELD DEVICE HAVING AN ASSEMBLY CLIP FOR FASTENING TO A FASTENING AREA

APPAREIL DE TERRAIN DOTE D'UNE PINCE DE MONTAGE POUR SA FIXATION A UNE SURFACE DE FIXATION

(84) Benannte Vertragsstaaten:
**DE FR GB**

(30) Priorität: **07.02.2006 US 771055 P**
　　　　　　　**07.02.2006 DE 102006005531**

(43) Veröffentlichungstag der Anmeldung:
**22.10.2008 Patentblatt 2008/43**

(73) Patentinhaber: **VEGA Grieshaber KG**
**77709 Wolfach (DE)**

(72) Erfinder:
• **SUM, Christian**
**77709 Wolfach (DE)**
• **MOTZER, Jürgen**
**77723 Gengenbach (DE)**
• **DECK, Thomas**
**77709 Wolfach (DE)**
• **FEHRENBACH, Josef**
**77716 Haslach (DE)**
• **KIENZLE, Klaus**
**77736 Zell am Harmersbach (DE)**
• **SKOWAISA, Jürgen**
**77761 Schiltach (DE)**
• **SACK, Holger**
**77761 Schiltach (DE)**

(74) Vertreter: **Maiwald Patent- und Rechtsanwaltsgesellschaft mbH Elisenhof Elisenstraße 3 80335 München (DE)**

(56) Entgegenhaltungen:
EP-A1- 1 172 600　　EP-A2- 0 237 698
US-A- 6 113 047　　US-A1- 2003 222 187

## Beschreibung

### Verwandte Anmeldungen

Die vorliegende Anmeldung beansprucht die Priorität der US Provisional Patentanmeldung Nr. 60/771 055, eingereicht am 7. Februar 2006 und der deutschen Patentanmeldung Nr. 10 2006 005 531.4 eingereicht am 7. Februar 2006.

### Technisches Gebiet

Die vorliegende Erfindung betrifft im Allgemeinen das technische Gebiet der Füllstand- und Druckmesstechnik. Insbesondere betrifft die vorliegende Erfindung eine Montageklammer zur Befestigung eines Feldgeräts sowie ein Feldgerät, welches zur Befestigung an einer Montagefläche mit solch einer Montageklammer ausgestattet ist.

Das US Patent US 6,113,047 beschreibt eine vibrationsresistente Montageklammer mit einer Basis, die mittels Bolzen an einer Haltestruktur befestigt werden kann.

Die Druckschrift EP 1 172 600 A1 betrifft eine Anordnung eines Flachbildschirms mit gelenkig angeschlossenem Fuss, welche zur Aufstellung von Flachbildschirmen auf horizontalen, ebenen Unterlagen, insbesondere auf Tischen, und zur Anordnung von Flachbildschirmen an vertikalen Ebenen, insbesondere an Wänden, angewendet wird.

Im Rahmen der vorliegenden Erfindung sind unter dem Gattungsbegriff Feldgerät unterschiedlich ausgestaltete Sensoren zu subsumieren, welche auf unterschiedlichen Messprinzipien beruhen können. So fallen unter dem Begriff Feldgerät beispielsweise Füllstandmessgeräte, Druckmessgeräte, Grenzstanderfassungsmessvorrichtungen sowie Temperaturmessvorrichtungen, um nur einige Beispiele zu nennen. In Bezug auf Füllstandmessvorrichtungen ist hervor zu heben, dass hierunter insbesondere so genannte TDR-Füllstandmessgeräte, Radarmessgeräte aber auch Ultraschallmessgeräte fallen. In Bezug auf Grenzwertgeber seien hier beispielsweise Vibrationsgrenzwertgeber, Ultraschallgrenzwertgeber sowie kapazitiv oder konduktiv arbeitende Grenzwertgeber genannt.

Feldgeräte, die auf den genannten Messprinzipien basieren, werden beispielsweise unter den Marken VEGAPULS, VEGASON, VEGAFLEX, VEGASWING, VEGABAR, VEGACAP von der VEGA Grieshaber KG vertrieben.

### Hintergrund der Erfindung

Feldgeräte wie beispielsweise Füllstandmessgeräte oder Druckmessgeräte werden beispielsweise in der Prozesstechnik eingesetzt, um den Füllstand oder den Druck in einem Behälter zu messen. Hierzu müssen die entsprechenden Geräte in oder an dem Behälter befestigt werden, was häufig entweder mittels einer Flanschbefestigung oder einer Einschraubbefestigung erfolgt. Bei der Flanschbefestigung weist beispielsweise ein Füllstandmessgerät einen tellerförmigen Flansch auf, welcher den Antennenhals des Geräts flanschartig umgibt, um mit einem entsprechenden Gegenflansch im Bereich einer Öffnung des Behälters verschraubt zu werden. Bei der Einschraubbefestigung ist der Antennenhals selbst mit einem Außengewinde ausgestattet, sodass dass das Füllstandmessgerät über das Außengewinde in ein entsprechendes Innengewinde in einer entsprechenden Behälteröffnung eingeschraubt werden kann.

Die beschriebenen Befestigungsmethoden unter Verwendung eines Flansches bzw. eines Einschraubgewindes sind jedoch verhältnismäßig unflexibel und erlauben lediglich eine Befestigung des Feldgeräts in einer bestimmten vordefinierten Position am Behälter.

Bei bestimmten Prozess- und Umgebungsbedingungen ist es jedoch häufig erforderlich, einen Füllstandsensor oder ein Druckmessgerät an der Innenseite eines Behälters beispielsweise an der Seitenwandung oder an der Innenseite eines geneigten Behälterdeckels oder auch an offenen Gerinnen oder Sammelbecken zu befestigen. Hierzu wurden bereits schwenkbare Bügel entwickelt, mittels derer die Geräte an den genannten Flächen befestigt werden konnten. Allerdings waren diese Bügel regelmäßig mit dem Nachteil behaftet, dass sie eine einmal eingestellte Schwenkposition des Feldgeräts aufgrund unerwünschter Vibrationen oder anderweitiger mechanischer Einflüsse nicht dauerhaft halten konnten, sodass sich eine einmal exakt eingestellte Messposition des Feldgeräts nicht auf Dauer aufrecht erhalten werden konnte, was letztendlich zu verfälschten und schlechten Messergebnissen führte.

### Darstellung der Erfindung

Ausgehend von den zuvor beschriebenen Befestigungsmethoden besteht eine Aufgabe der vorliegenden Erfindung darin, eine Realisierung anzugeben, mit welcher ein Feldgerät wie beispielsweise ein Füllstandmessgerät, ein Druckmessgerät oder eine Grenzstanderfassungsmessvorrichtung an einer beliebig geneigten Befestigungsfläche angebracht werden kann, und welche es erlaubt, das Feldgerät in eine beliebige gewünschte Messposition auszurichten, welche dauerhaft aufrecht erhalten werden kann.

Gemäß einem ersten Aspekt der vorliegenden Erfindung wird die derselben zugrunde liegende Aufgabe mit einer Montageklammer gelöst, welche speziell ausgebildet ist, um ein Feldgerät an einer Befestigungsfläche anzubringen. Hierbei umfasst die Montageklammer einen ersten Klammerbügel, welcher mit einem ersten Drehlager ausgestattet ist. Fernerhin umfasst die Montageklammer einen zweiten Klammerbügel, welcher ebenfalls mit einem in diesem Falle zweiten Drehlager ausgestattet ist, wobei dieser zweite Klammerbügel von dem ersten Klammerbügel durch einen Abstand beabstandet ist. Bei den beiden Drehlagern kann es sich beispielsweise um einfache Durchgangsöffnungen in den jeweiligen Klammerbügeln oder um entsprechende Drehzapfen handeln, welche an den beiden Klammerbügeln angeformt oder angebracht sind. Darüber hinaus umfasst die erfindungsgemäße Montageklammer eine Verriegelung, welche beweglich an einem der beiden Klammerbügeln angeordnet ist, um damit einer unerwünschten Verdrehung eines an der Montageklammer gelagerten Feldgeräts zu verhindern, wie dies im Folgenden noch erläutert wird. Um ein Feldgerät in die Montageklammer aufnehmen zu können, sind die beiden Drehlager ausgebildet, um ein in dem Abstand zwischen den beiden Klammerbügeln anordenbares Feldgerät an zwei gegenüberliegenden Seiten gelenkig zu lagern, wozu die beiden Klammerbügel das Feldgerät klammerartig umfassen bzw. beflanken. Durch die gelenkige Lagerung lässt sich ein Feldgerät um eine durch den Abstand zwischen den beiden Klammerbügeln hindurch verlaufende, gedachte Achse aus einer ersten Winkelstellung in eine zweite Winkelstellung verschwenken, sodass das Feldgerät annähernd beliebig ausgerichtet werden kann. Um eine so eingestellte zweite Winkelstellung dauerhaft aufrecht zu erhalten, kommt die Verriegelung zum Einsatz, welche ausgebildet ist, um mit dem Feldgerät in Eingriff zu gelangen. Wenn die Verriegelung, welche ihrerseits an einem der Klammerbügel angeordnet ist, mit dem Feldgerät in Eingriff gelangt, kann sie einem Drehmoment widerstehen, welches durch eine Drehbewegung des Feldgeräts hervor gerufen wird, indem sie das Drehmoment in ein Kräftepaar umwandelt, welches dann über eines der Drehlager sowie die Verriegelung selbst über einen der Klammerbügel, insbesondere über jenen Klammerbügel, an dem die Verriegelung angebracht ist, abgetragen wird. Die Verriegelung verhindert dabei eine Verdrehung des Feldgeräts gegenüber der Montageklammer bzw. umgekehrt, indem die Montageklammer mit dem Feldgerät über die Verriegelung kraft- oder formschlüssig verbunden wird, sodass eine unbeabsichtigte Verdrehung des Feldgeräts ausgeschlossen werden kann.

Die Montageklammer bzw. die beiden Klammerbügel selbst können aus einem Flachstahl gefertigt sein, welcher im Bereich der Drehlager scheibenartige Aufweitungen aufweisen kann, sodass genügend Platz zur Anordnung der Verriegelung vorhanden ist. Die Drehlager können beispielsweise als einfache Durchgangsöffnungen ausgebildet sein, durch welche hindurch Schrauben als Scharnierstift in das zu befestigende Feldgerät eingeschraubt werden können. Alternativ dazu kann das Feldgerät an seiner Mantelfläche jedoch auch beispielsweise Scharnierzapfen aufweisen, welche in die Durchgangsöffnungen des Klammerbügels drehbar eingreifen können. Eine noch weitere Ausgestaltung der Drehlager kann so ausgestaltet sein, dass die Drehlager selbst als Scharnierzapfen einstückig an den beiden Klammerbügeln angeformt sind, welche in entsprechende Öffnungen in der Mantelfläche des Feldgeräts eingreifen können.

Die beiden Klammerbügel selbst sind so voneinander beabstandet, dass zwischen ihnen ein Feldgerät drehbar eingepasst werden kann, wobei die beiden Klammerbügel solch eine Gestalt aufweisen, dass sie eine Schwenkbewegung des Feldgeräts in der Montageklammer nicht behindern.

Bei der Verriegelung kann es sich beispielsweise um einen Zapfen oder Stift handeln, welcher beweglich an einem der Klemmbügel angeordnet sein kann, um mit dem Feldgerät bzw. einem Abschnitt in der Mantelfläche des Feldgeräts in Eingriff zu gelangen, um auf diese Weise eine eingestellte zweite Winkelstellung dauerhaft festzulegen. Erfindungsgemäß umfasst die Verriegelung eine Schraube, welche exzentrisch zu einem der Drehlager in einem der Klemmbügel eingeschraubt ist und welche in eine Mantelfläche des Feldgeräts eingeschraubt werden kann, sodass der Bügel gegenüber dem Feldgerät bzw. umgekehrt nicht mehr verdreht werden kann.

Zur Aufnahme der Schraube ist in dem ersten Klammerbügel eine erste Durchgangsöffnung ausgebildet, durch welche hindurch die Schraube mit der Mantelfläche des Feldgeräts in Eingriff gebracht werden kann, indem die Schraube in Richtung des Feldgeräts weiter in die Durchgangsöffnung eingeschraubt wird, wodurch eine zweite Winkelstellung dauerhaft festgelegt werden kann, indem die Schraube eine Verdrehung des Feldgeräts gegenüber dem ersten Klammerbügel verhindert.

Um das Feldgerät unter definierten Winkelstellungen fixieren zu können, sind in dem ersten Klammerbügel mehrere erste Durchgangsöffnungen ausgebildet, welche allesamt um ein definiertes Bodenmaß auf einem Kreisbogen versetzt zueinander angeordnet sind, sodass, wenn die Schraube in alternativen Montagezuständen durch unterschiedliche der ersten Durchgangsöffnungen hindurch mit der Mantelfläche des Feldgeräts in Eingriff gelangt, das Feldgerät unter definierten Winkelstellungen festgelegt ist.

Um mit der Mantelfläche des Feldgeräts in Eingriff zu gelangen, kann das Feldgerät beispielsweise eine zu dem Durchmesser des Schraubenschafts passende Öffnung aufweisen, in welche die Schraube zur Arretierung des Feldgeräts durch eine der ersten Durchgangsöffnungen in dem ersten Klammerbügel einschraubbar ist. Die Öffnung in der Mantelfläche kann hierzu beispielsweise ein Sackloch mit oder ohne Innengewinde sein. Im Falle, dass die Öffnung in der Mantelfläche des Feldgeräts kein entsprechendes Innengewinde aufweist, sollte der Öffnungsdurchmesser exakt auf den Schaftdurchmesser der Schraube abgestimmt sein, sodass die Schraube formschlüssig in die Öffnung eingreifen kann. Im Falle, dass die Öffnung mit einem Einschraubgewinde ausgestattet ist, kann die Schraube darin zur Arretierung des Feldgeräts eingeschraubt und fest gezogen werden, wodurch das Feldgerät mit dem ersten Klammerbügel verspannt werden kann, was eine besonders sichere Festlegung des Feldgeräts in Bezug auf unerwünschte Verschwenkungen sicher stellt.

Da eine Standardeinbausituation eines Feldgeräts in einem Behälter beispielsweise so gestaltet sein kann, dass das Feldgerät an einer senkrechten Innenwandung befestigt werden soll und eine andere Einbausituation so gestaltet sein kann, dass ein Feldgerät an einer horizontalen Behälterwand eingebaut werden soll, ist es wünschenswert, die Montageklammer so auszubilden, dass mit ihr ein Feldgerät unter definierten Winkeln zur Horizontalen ausgerichtet werden kann, ohne dass diese Winkelstellung bei der Montage extra händisch eingemessen werden muss. Um dies zu gewährleisten, können die einzelnen ersten Durchgangsöffnungen der Mehrzahl an ersten Durchgangsöffnungen in dem ersten Klammerbügel um ein Bogenmaß von n ∗ π / 8 versetzt zueinander angeordnet sein, mit

$$n \in \mathbb{N}^{*},$$

was eine Winkeleinstellung des Feldgeräts in dem Bügel in Schritten von 22,5° ermöglicht. Selbstverständlich ist es möglich, diese Rasterung feiner zu dimensionieren, wodurch eine noch feinere Winkeleinstellung der Feldgeräte ermöglicht wird.

Da die Behälterwandungen jedoch auch eine beliebige Neigung aufweisen können oder ein Feldgerät aus anderen Gründen unter einem beliebigen Winkel ausgerichtet werden soll, ist es wünschenswert, den Klammerbügel mit einer Verriegelung auszustatten, welcher eine stufenlose Einstellung des Feldgeräts ermöglicht. Hierzu wird erfindungsgemäß in dem zweiten Klammerbügel zumindest eine zweite Durchgangsöffnung mit einer kreisbogenförmigen Gestalt ausgebildet, durch welche hindurch ebenfalls eine Schraube mit der Mantelfläche des Feldgeräts in Eingriff gebracht werden kann, um auf diese Weise die Mantelfläche des Feldgeräts in der zweiten Stellung mit dem zweiten Klemmbügel zu verspannen. Um die Winkelstellung des Feldgeräts dabei zu verändern, kann die Schraube locker in eine entsprechende Öffnung in der Mantelfläche des Feldgeräts eingeschraubt sein und sich gleichzeitig durch die kreisbogenförmige zweite Durchgangsöffnung in dem zweiten Klemmbügel hindurch erstrecken, wodurch eine Verstellung der Winkelstellung stufenlos möglich wird. Damit sich bei einer derartigen Verschwenkung die Schraube jedoch nicht in der kreisbogenförmigen zweiten Durchgangsöffnung verkeilt, liegt der Mittelpunkt der kreisbogenförmigen zweiten Durchgangsöffnung auf der durch den Abstand zwischen dem ersten Klammerbügel und dem zweiten Klammerbügel hindurch verlaufenden gedachten Achse, wodurch gewährleistet werden kann, dass die in die Mantelfläche des Feldgeräts eingeschraubte Schraube bei einer Verschwenkung der Montageklammer den von der kreisbogenförmigen zweiten Durchgangsöffnung vorgegebenen Kreisbogen beschreibt. Durch die Einschraubung der Schraube in eine mit der kreisbogenförmigen zweiten Durchgangsöffnung fluchtenden Einschrauböffnung in der Mantelfläche des Feldgeräts kann eine kraftschlüssige Verbindung zwischen dem zweiten Klammerbügel und der Mantelfläche des Füllstandmessgeräts sicher gestellt werden, indem die Mantelfläche des Feldgeräts gegen den zweiten Klammerbügel verspannt wird.

Um die Montageklammer ihrerseits an einer Befestigungsfläche anbringen zu können, umfasst die Montageklammer fernerhin einen Verbindungssteg, welcher den ersten Klammerbügel und den zweiten Klammerbügel einstückig miteinander verbindet. Der Verbindungssteg verläuft dabei parallel zu der durch den Abstand zwischen dem ersten Klammerbügel und dem zweiten Klammerbügel hindurch verlaufenden, gedachten Achse. Zur Befestigung der Montageklammer weist dieser Verbindungssteg in seiner Mitte eine Durchgangsöffnung auf, sodass durch diese hindurch die Montageklammer an einer Befestigungsfläche mittels einer Schraube angebracht werden kann. Die Montageklammer kann somit als ganzes um eine Achse gedreht werden, welche senkrecht zu der gedachten Achse zwischen den beiden Klammerbügeln verläuft, sodass in Kombination mit der Schwenkachse zwischen den beiden Klammerbügeln ein von der Montageklammer aufgenommenes Feldgerät in annährend jede Drehstellung im Raum gebracht werden kann.

Gemäß einem weiteren Aspekt der vorliegenden Erfindung wird ein Feldgerät angegeben, dessen Mantelfläche speziell ausgebildet ist, um das Feldgerät mittels der in den voran stehenden Passagen beschriebenen Montageklammer an einer Befestigungsfläche zu befestigen. Dabei weist das Feldgerät eine Mantelfläche auf, welche so ausgebildet ist, um schwenkbar in dem Abstand zwischen dem ersten Klammerbügel und dem zweiten Klammerbügel der Montageklammer an dem ersten Drehlager und dem zweiten Drehlager gelenkig angebracht zu werden. Hierbei ist das Feldgerät insbesondere mit seiner Mantelfläche in dem Abstand zwischen dem ersten Klammerbügel und dem zweiten Klammerbügel angeordnet und an zwei gegenüberliegenden Seiten gelenkig an den Drehlagern gelagert, sodass das Feldgerät um eine durch die beiden Drehlager hindurch verlaufende gedachte Achse aus einer ersten Winkelstellung in eine zweite Winkelstellung verschwenkt werden kann.

Um an den beiden Drehlagern angebracht zu werden, kann das Feldgerät beispielsweise in seiner Mantelfläche zwei gegenüberliegende Öffnungen aufweisen, in welche die Drehlager in Form von Gelenkzapfen oder Schrauben gelenkig eingreifen können.

Fernerhin weist das Feldgerät in seiner Mantelfläche zumindest eine weitere Öffnung auf, welche so angeordnet ist, dass sie durch eine Schwenkbewegung des Feldgeräts mit einer der ersten Durchgangsöffnungen des ersten Klammerbügels in Fluchtung gebracht werden kann, sodass die voran genannte Verriegelungsschraube darin angeordnet werden kann, sodass sie sich von einer der ersten Durchgangsöffnungen in die Öffnung in der Mantelfläche hinein erstreckt. Auf diese Weise steht der erste Klammerbügel über die Schraube mit dem Feldgerät bzw. dessen Mantelfläche in Verbindung, sodass eine unerwünschte Verdrehung des Feldgeräts in Bezug auf die Montageklammer ausgeschlossen ist.

Die zuvor angesprochene Öffnung in der Mantelfläche kann so angeordnet sein, dass sie während einer Schwenkbewegung des Feldgeräts mit der zweiten Durchgangsöffnung mit kreisbogenförmiger Gestalt des zweiten Klammerbügels in Fluchtung gebracht werden kann, sodass die Schraube so angeordnet werden kann, dass sie sich während der Schwenkbewegung durch die kreisbogenförmige Durchgangsöffnung hindurch in die Öffnung in der Mantelfläche erstreckt, um damit die Mantelfläche des Feldgeräts über die Schraube mit dem zweiten Klammerbügel zu verspannen.

Gemäß noch einem weiteren Aspekt wird zur Lösung der der vorliegenden Erfindung zugrunde liegenden Aufgabe ein Feldgerät angegeben, welches mit einer Montageklammer ausgestattet ist, mit der das Feldgerät an einer Befestigungsfläche angebracht werden kann. Die Montageklammer des Feldgeräts umfasst dabei einen ersten Klammerbügel mit einem ersten Drehlager sowie einen von dem ersten Klammerbügel durch einen Abstand beabstandeten zweiten Klammerbügel mit einem zweiten Drehlager. Darüber hinaus umfasst die Montageklammer zumindest eine Verriegelung, welche beweglich an einem der beiden Klammerbügel angeordnet ist. Um das Feldgerät mittels der Montageklammer an einer Befestigungsfläche anbringen zu können, ist das Feldgerät in den Abstand zwischen den beiden Klammerbügeln eingepasst, welche das Feldgerät an zwei gegenüber liegenden Seiten seiner Mantelfläche an den beiden Drehlagern gelenkig lagern. Auf diese Weise kann das Feldgerät um eine durch den Abstand hindurch verlaufende gedachte Achse aus einer ersten Winkelstellung in eine zweite Winkelstellung geschwenkt werden. Um eine auf diese Weise eingestellte zweite Winkelstellung dauerhaft festlegen zu können, ist die Verriegelung ausgebildet, um mit dem Feldgerät in Eingriff zu gelangen. Dadurch, dass die Verriegelung somit das Feldgerät mit einem der beiden Klammerbügel verbindet, ist sie in der Lage, einem Drehmoment des Feldgeräts zu widerstehen, indem sie das Drehmoment in ein Kräftepaar aufspaltet, welches über eines der Drehlager und die Verriegelung selbst abgetragen wird.

Die Verriegelung umfasst eine Schraube, welche durch den ersten Klammerbügel hindurch mit der Mantelfläche des Feldgeräts in Eingriff gebracht werden kann, um so die zweite Winkelstellung dauerhaft festzulegen, indem sie eine Verdrehung des Feldgeräts gegenüber dem ersten Klammerbügel verhindert. Selbstverständlich kann die Verriegelung anstelle einer Schraube auch einen Stift oder Zapfen umfassen, welcher an Stelle der Schraube mit dem Feldgerät formschlüssig in Eingriff gebracht werden kann.

Zur Aufnahme der Schraube bzw. eines Zapfens oder eines Stifts ist in dem ersten Klammerbügel zumindest eine erste Durchgangsöffnung ausgebildet, durch welche die Schraube mit der Mantelfläche des Feldgeräts in Eingriff gebracht werden kann, um so die zweite Winkelstellung dauerhaft festzulegen.

Um das Feldgerät nicht nur in einer Winkelstellung arretieren zu können, sind in dem ersten Klammerbügeln mehrere erste Durchgangsöffnungen ausgebildet, welche allesamt auf einem Kreisbogen liegen und um ein definiertes Bogenmaß versetzt zueinander angeordnet sind, sodass das Feldgerät unter definierten Winkelstellungen festgelegt werden kann. Hierzu wird der Zapfen in alternativen Montagezuständen durch unterschiedliche der ersten Durchgangsöffnungen hindurch mit der Mantelfläche des Feldgeräts in Eingriff gebracht, wodurch eine weitere Verschwenkung des Feldgeräts ausgeschlossen ist. Wie bereits zuvor angesprochen, können die ersten Durchgangsöffnungen um ein Bogenmaß versetzt zueinander angeordnet sein, welches einem Vielfachen von $\pi / 8$ entspricht, sodass das Feldgerät in Schritten von 22,5° an dem Montagebügel festgelegt werden kann. Selbstverständlich ist es möglich, diese Rasterung feiner zu dimensionieren, wodurch eine noch feinere Winkeleinstellung der Feldgeräte ermöglicht wird.

Da die Behälterwandungen jedoch auch eine beliebige Neigung aufweisen können oder ein Feldgerät aus anderen Gründen unter einem beliebigen Winkel ausgerichtet werden soll, ist es wünschenswert, den Klammerbügel mit einer Verriegelung auszustatten, welcher eine stufenlose Einstellung des Feldgeräts ermöglicht. Hierzu ist in dem zweiten Klammerbügel zumindest eine zweite Durchgangsöffnung mit einer kreisbogenförmigen Gestalt ausgebildet, durch welche hindurch ebenfalls eine Schraube mit der Mantelfläche des Feldgeräts in Eingriff gebracht werden kann, um auf diese Weise die Mantelfläche des Feldgeräts in der zweiten Stellung mit dem zweiten Klemmbügel zu verspannen. Um die Winkelstellung des Feldgeräts dabei zu verändern, kann die Schraube locker in eine entsprechende Öffnung in der Mantelfläche des Feldgeräts eingeschraubt sein und sich gleichzeitig durch die kreisbogenförmige zweite Durchgangsöffnung in dem zweiten Klemmbügel hindurch erstrecken, wodurch eine Verstellung der Winkelstellung stufenlos möglich wird. Damit sich bei einer derartigen Verschwenkung die Schraube jedoch nicht in der kreisbogenförmigen zweiten Durchgangsöffnung verkeilt, liegt der Mittelpunkt der kreisbogenförmigen zweiten Durchgangsöffnung auf der durch den Abstand zwischen dem ersten Klammerbügel und dem zweiten Klammerbügel hindurch verlaufenden gedachten Achse, wodurch gewährleistet werden kann, dass die in die Mantelfläche des Feldgeräts eingeschraubte Schraube bei einer Verschwenkung der Montageklammer den von der kreisbogenförmigen zweiten Durchgangsöffnung vorgegebenen Kreisbogen beschreibt. Durch die Einschraubung der Schraube in eine mit der kreisbogenförmigen zweiten Durchgangsöffnung fluchtenden Einschrauböffnung in der Mantelfläche des Feldgeräts kann eine kraftschlüssige Verbindung zwischen dem zweiten Klammerbügel und der Mantelfläche des Füllstandmessgeräts sicher gestellt werden, indem die Mantelfläche des Feldgeräts gegen den zweiten Klammerbügel verspannt wird.

Um die Montageklammer ihrerseits an einer Befestigungsfläche anbringen zu können, umfasst die Montageklammer fernerhin einen Verbindungssteg, welcher den ersten Klammerbügel und den zweiten Klammerbügel einstückig miteinander verbindet. Der Verbindungssteg verläuft dabei parallel zu der durch den Abstand zwischen dem ersten Klammerbügel und dem zweiten Klammerbügel hindurch verlaufenden, gedachten Achse. Zur Befestigung der Montageklammer weist dieser Verbindungssteg in seiner Mitte eine Durchgangsöffnung auf, sodass durch diese hindurch die Montageklammer an einer Befestigungsfläche mittels einer Schraube angebracht werden kann. Die Montageklammer kann somit als ganzes um eine Achse gedreht werden, welche senkrecht zu der gedachten Achse zwischen den beiden Klammerbügeln verläuft, sodass in Kombination mit der Schwenkachse zwischen den beiden Klammerbügeln das von der Montageklammer aufgenommene Feldgerät in annähernd jede Drehstellung im Raum gebracht werden kann.

## Kurze Beschreibung der Zeichnungen

Im Folgenden wird die Erfindung unter Bezugnahme auf die beigefügten Zeichnungen exemplarisch erläutert. An dieser Stelle sei betont, dass die in den Figuren gezeigten Ausführungsformen der Erfindung diese lediglich rein exemplarisch erläutern und insbesondere nicht als Schutzbereich einschränkend aufgefasst werden dürfen. Es zeigt:

Fig. 1     zeigt eine perspektivische Ansicht einer erfindungsgemäßen Montageklammer;

Fig. 2     zeigt eine perspektivische Ansicht eines Füllstandmessgeräts mit einer erfindungsgemäßen Montageklammer in einer Nullgradstellung;

Fig. 3     zeigt eine weitere perspektivische Ansicht eines erfindungsgemäßen Füllstandmessgeräts mit einer erfindungsgemäßen Montageklammer in einer 45°-Stellung; und

Fig. 4     zeigt eine weitere perspektivische Ansicht eines erfindungsgemäßen Füllstandmessgeräts mit einer erfindungsgemäßen Montageklammer in einem an einer Befestigungsfläche angebrachten Zustand.

In sämtlichen Figuren hinweg sind gleiche oder ähnliche Elemente mit gleichen oder übereinstimmenden Bezugszeichen gekennzeichnet. Die Darstellungen sind nicht zwangsweise maßstäblich, können jedoch qualitative Größenverhältnisse wiedergeben.

## Beschreibung beispielhafter Ausführungsformen der Erfindung

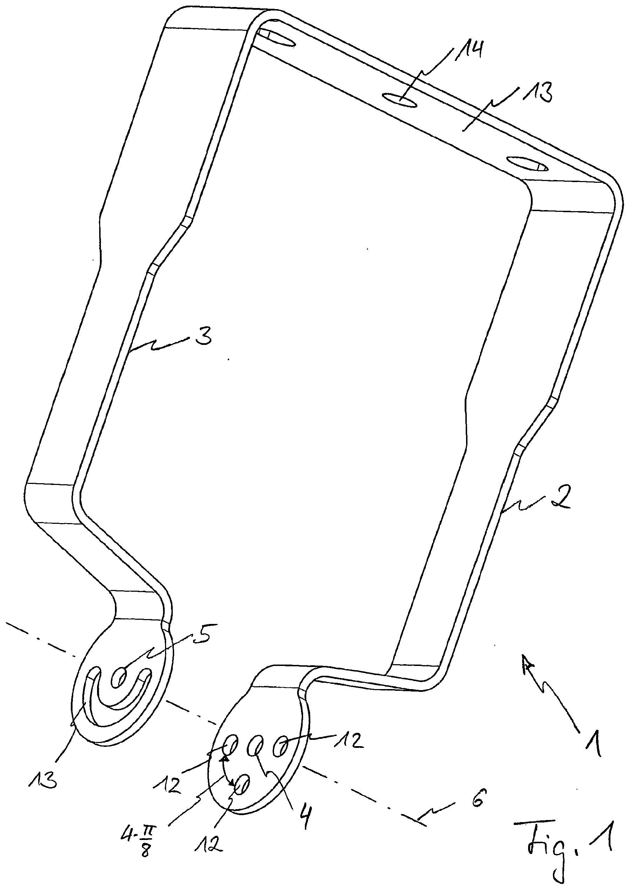

Die Fig. 1 zeigt eine perspektivische Darstellung der erfindungsgemäßen Montageklammer 1. Die Montageklammer 1 weist im Wesentlichen eine U-förmige, gebogene Gestalt auf, wobei die beiden Schenkel des U's sich an ihren freien Enden in Form zweier ungebogener Schenkelabschnitte aneinander annähern. Die Montageklammer 1 kann beispielsweise aus einem Flachstahl gefertigt sein, welcher beispielsweise aus einem Edelstahl wie beispielsweise einem V2A-Stahl, V4A-Stahl oder einem verzinkten Stahl bestehen kann. Selbstverständlich ist jedoch auch die Verwendung von Aluminium bzw. Aluminiumlegierungen denkbar. Alternativ hierzu kann die Montageklammer 1 beispielsweise auch aus einem Kunststoff wie beispielsweise einem Polyamid, Polypropylen oder Polycarbonat gefertigt sein. Auch Kombinationen mit gefüllten Kunststoffen, z.B. mit Glasfaser, sind möglich.

Wie der Fig. 1 entnommen werden kann, weist die Montageklammer 1 einen ersten Klammerbügel 2 sowie einen zweiten Klammerbügel 3 auf. Diese beiden Klammerbügel 2, 3 sind durch einem Verbindungssteg 13 miteinander verbunden, in welchem in der Mitte eine Durchgangsöffnung 14 ausgebildet ist, um die Montageklammer 1 an einer Befestigungsfläche beispielsweise durch eine Verschraubung zu befestigen. In Folge einer derartigen Anschraubbefestigung lässt sich der Klammerbügel 1 als Ganzes um eine Achse verdrehen, welche durch die Durchgangsöffnung 14 und parallel zu den Klammerbügeln 2, 3 verläuft.

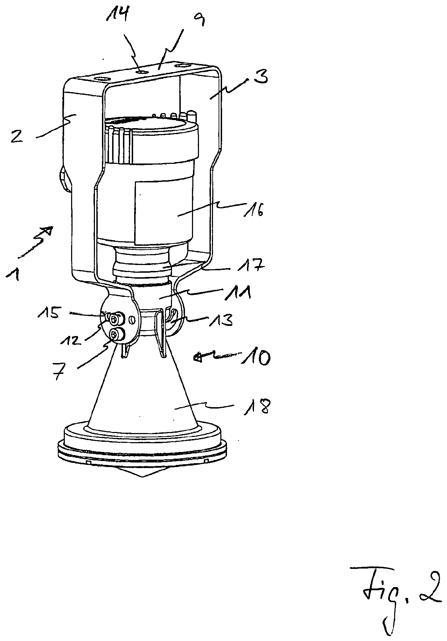

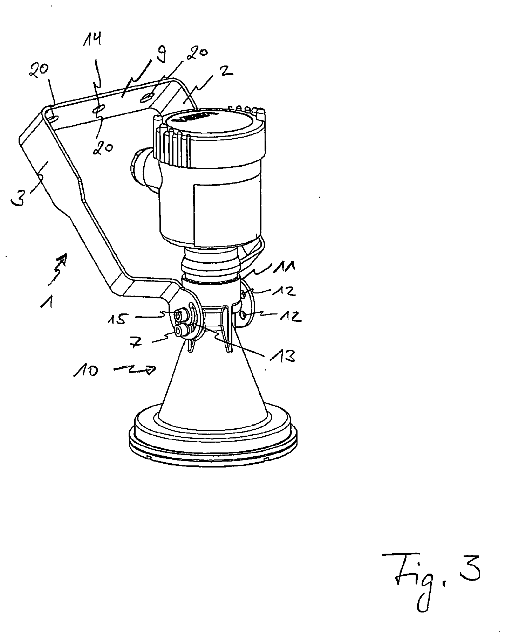

Die beiden Klammerbügel 2, 3 verlaufen im Wesentlichen parallel zueinander und sind durch einen Abstand voneinander beabstandet, sodass darin ein Feldgerät, wie es beispielsweise die Fig. 2 - 4 zeigen, angeordnet werden kann. An ihren freien Enden nähern sich die beiden Klammerbügel 2, 3 gegenseitig an, was durch eine entsprechende gebogene Gestalt an den freien Enden der Klammerbügel 2, 3 erfolgt. An ihren freien Enden weisen die beiden Klammerbügel 2, 3 teller- oder scheibenförmige Aufweitungen auf, um entsprechenden Platz für die Drehlager 4, 5 sowie für die Verriegelung bereitstellen zu können, worauf im Folgenden genauer eingegangen werden soll.

Wie die Fig. 1 zeigt, ist in der scheibenförmigen Aufweitung des ersten Klammerbügels 2 ein erstes Drehlager 4 und in der scheibenförmigen Aufweitung des zweiten Klammerbügels 3 ein zweites Drehlager 5 ausgebildet. Die beiden Drehlager 4, 5 weisen dabei die Gestalt einer einfachen Durchgangsöffnung in den jeweiligen freien Enden der beiden Klammerbügel 2, 3 auf. In diesen beiden Drehlagern 4, 5 wird ein Feldgerät 10 drehbar gelagert, wie dies die Fig. 2 - 4 zeigen, und worauf später noch genauer eingegangen werden soll.

In dem freien Ende des ersten Klammerbügels 2 sind neben der Durchgangsöffnung für das Drehlager 4 drei weitere Durchgangsöffnungen 12 ausgebildet, durch welche hindurch eine entsprechende Verriegelung mit einem von dem Klammerbügel 2 zu haltenden Feldgerät in Eingriff gebracht werden kann. Die drei Durchgangsöffnungen 12 sind dabei gegenseitig um ein Bogenmaß von 4 * π / 8 versetzt zueinander angeordnet, sodass ein Feldgerät dementsprechend in 90 Grad-Schritten in der Montageklammer 1 arretiert werden kann.

Neben dem zweiten Drehlager 5 in Form einer Durchgangsöffnung ist in der scheibenförmigen Aufweitung am freien Ende des zweiten Klammerbügels 3 eine weitere Durchgangsöffnung 13 ausgebildet, welche eine kreisbogenförmige Gestalt aufweist. Durch diese Durchgangsöffnung 13 (zweite Durchgangsöffnung) lässt sich eine Schraube hindurch führen, um mit der Mantelfläche eines von der Montageklammer 1 zu haltenden Feldgeräts in Eingriff zu gelangen. Die Durchgangsöffnung 13 erstreckt sich über ein Bogenmaß von etwa $\pi$, sodass ein Feldgerät entsprechend um 180° verschwenkt werden kann und in jeder beliebigen Stellung mit Hilfe einer Schraube, welche sich durch die Durchgangsöffnung 13 hindurch in das Feldgerät erstreckt, arretiert werden kann, indem das freie Ende des zweiten Bügels 3 mit dem Feldgerät mittels der Schraube verspannt wird.

Im Folgenden soll nun unter Bezugnahme auf die Fig. 2 - 4 die Funktionsweise der erfindungsgemäßen Montageklammer genauer erläutert werden.

Wie die Fig. 2 zeigt, ist in den Abstand zwischen dem ersten Klammerbügel 2 und dem zweiten Klammerbügel 3 ein Feldgerät 10 eingepasst, welches beispielsweise ein Füllstandmessgerät, ein Druckmessgerät oder ein Grenzstandschalter sein kann. Bei dem hier in der Fig. 2 gezeigten Gerät handelt es sich jedoch ganz konkret um ein Füllstandmessgerät, welches von außen betrachtet im Wesentlichen aus einem Gehäuse 16 und einem daran über einen Prozessanschluss 17 angebrachten Antennenhorn 18 besteht. In dem Gehäuse 16 sind die einzelnen Elektronikkomponenten zur Erzeugung und Verarbeitung von Mikrowellen beinhaltet, mit denen die Füllstandmessung mit dem Füllstandmessgerät 10 vorgenommen wird. Die Mikrowellen werden dabei über das Antennenhorn 18 in Richtung einer Füllgutoberfläche ausgesandt, von welcher sie zu dem Füllstandmessgerät 10 zurück reflektiert werden, sodass über eine Laufzeitmessung der Mikrowellen ein Rückschluss auf die Entfernung des Füllguts von dem Füllstandmessgerät 10 und daraus eine Bestimmung der Füllstandhöhe vorgenommen werden kann.

Bei dem in den Fig. 2 - 4 gezeigten Ausführungsbeispiel ist das Füllstandmessgerät 10 im Bereich des Prozessanschlusses 17 bzw. im Bereich des Antennenhalses an den Drehlagern 4, 5 der beiden Klammerbügel 2, 3 gelenkig gelagert. Hierzu erstrecken sich durch die beiden Drehlager 4, 5 in Form von einfachen Durchgangsöffnungen zwei Schrauben 15 hindurch, welche an zwei gegenüberliegenden Seiten mit dem Antennenhals bzw. dem Prozessanschluss 17 in Eingriff stehen, sodass sich das Feldgerät 10 um eine durch den Abstand zwischen den beiden Klammerbügeln 2, 3 hindurch verlaufende gedachte Achse verschwenken lässt.

Der Klammerbügel 1 umfasst fernerhin eine Verriegelung, mit welcher das Feldgerät 10 alternativ in definierten Winkelstellungen oder unter beliebigen Winkelstellungen an den Klammerbügel 1 fixiert werden kann. Bei der Verriegelung kann es sich beispielsweise um eine einfache Schraube 7 handeln, welche beispielsweise durch eine der Durchgangsöffnungen 12 in dem ersten Klammerbügel hindurch geführt werden kann, um mit dem Feldgerät in Eingriff zu gelangen, wozu das Feldgerät in seiner Mantelfläche, in der Fig. 2 im Bereich des Prozessanschlusses bzw. des Antennenhalses eine entsprechende Öffnung aufweist, in die die Schraube 7 eingeschraubt werden kann.

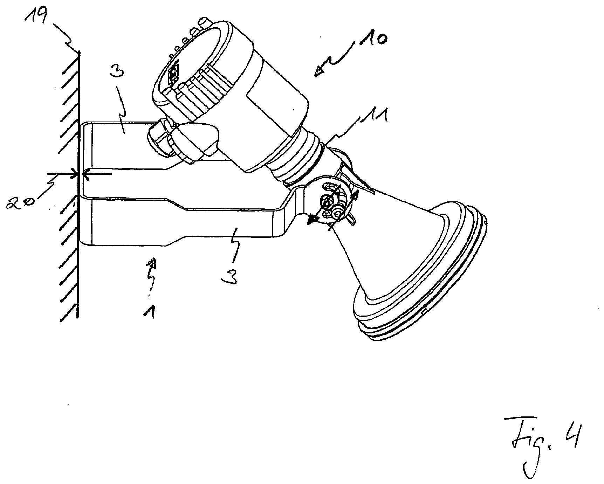

Versucht sich nun das so festgelegte Füllstandgerät 10 zu verdrehen, so wird das erzeugte Drehmoment in ein Kräftepaar aufgespalt (siehe Fig. 4), welches über das Drehlager 3 sowie die Schraube 7 in den ersten Klammerbügel 2 abgetragen wird. Um das Feldgerät 10 in der Fig. 2 in einer um 90 Grad gedrehten Stellung zu arretieren, wird die Schraube 7 gelöst, sodass das Feldgerät 10 um + 90° bzw. - 90° verschwenkt werden kann. In dieser um +/- 90° verschwenkten Stellung fluchtet die Öffnung in der Mantelfläche des Feldgeräts 10 mit der um ein Bogenmaß von $\pi/2$ bzw. - $\pi/2$ versetzten Durchgangsöffnung 12, sodass in dieser Stellung das Feldgerät 10 wiederum arretiert werden kann, indem die Schraube 7 in das um + $\pi/2$ bzw. - $\pi/2$ versetzte Durchgangsloch 12 hindurch in die Öffnung in dem Antennenhals bzw. Prozessanschluss 17 eingeschraubt wird.

Anstatt in der tellerförmigen Aufweitung am Ende des ersten Klammerbügels 2 mehrere Durchgangsöffnungen 12 vorzusehen, durch welche hindurch eine Schraube 7 mit dem Feldgerät 10 in Eingriff gebracht werden kann, wäre es selbstverständlich ebenfalls denkbar, den ersten Klammerbügel 2 mit nur eine Durchgangsöffnung 12 zu versehen, dafür jedoch im Antennenhals bzw. im Prozessanschluss 17 mehrere Öffnungen vorzusehen, welche allesamt auf einem Kreisbogen liegen, welche bei einer Drehbewegung des Feldgeräts 10 die eine Durchgangsöffnung 12 in dem freien Ende des ersten Klammerbügels passieren, sodass auf diese Weise das Feldgerät in definierten Winkelstellungen arretiert werden kann, indem die Schraube 7 mit diesen unterschiedlichen Öffnungen in dem Feldgerät durch die eine Durchgangsöffnung 12 im ersten Klammerbügel in Eingriff gebracht wird.

Sollte es wünschenswert sein, das Feldgerät 10 unter beliebigen Winkelstellungen in Bezug auf die Montageklammer festzulegen, kann die Verriegelung 7 in Form einer Schraube der Montageklammer 1 durch die halbkreisförmige Durchgangsöffnung 13 hindurch geführt werden, um in ein Schraubgewinde im Antennenhals bzw. im Bereich des Prozessanschlusses des Feldgeräts 10 eingeschraubt zu werden, um so die tellerförmige Aufweitung am freien Ende des zweiten Klammerbügels 3 mit dem Antennenhals bzw. dem Prozessanschluss 17 zu verspannen. Da der Mittelpunkt der kreisbogenförmigen Durchgangsöffnung 13 auf der durch den Abstand zwischen dem ersten Klammerbügel 2 und dem zweiten Klammerbügel 3 hindurch verlaufenden gedachten Achse liegt, kann das Feldgerät 10 in der Montageklammer 1 verschwenkt werden ohne dass sich die Schraube 7 in der kreisbogenförmige Durchgangsöffnung 13 verkeilt. Vielmehr fluchtet die Einschrauböffnung im Antennenhals bzw. im Prozessanschluss 17, in welche die Schraube 7 durch die kreisbogenförmige Durchgangsöffnung 13 hindurch eingeschraubt werden kann, in jeder beliebigen Winkelstellung des Feldgeräts 10 stets mit der kreisbogenförmigen Durchgangsöffnung 13, sodass das Feldgerät 10 sich unbehindert in eine beliebige Winkelstellung verschwenken lässt, in der es mittels der Schraube 7 arretiert werden kann, indem diese Schraube 7 in die Gewindeöffnung im Antennenhals bzw. im Prozessanschluss 17 eingeschraubt wird, wodurch dieser gegen die tellerförmige Aufweitung am freien Ende des zweiten Klammerbügels verspannt wird.

Die Fig. 4 zeigt abschließend eine Montagestellung des Feldgeräts 10, indem dieses um etwa 45° verschwenkt ist. Die Montageklammer 1 ist dabei an einer Befestigungsfläche 19 mittels einer Schraubbefestigung 20 durch die Durchgangsöffnung 14 im Verbindungssteg 9 fest geschraubt, sodass der Bügel 1 mitsamt dem Feldgerät 10 um diese Verschraubung herum verschwenkt werden kann, sodass sich das Feldgerät 10 im Raum in annähernd jede Richtung ausrichten lässt. Um eine nachträgliche Justierung um die Schraubbefestigung 20 durch die Durchgangsöffnung 14 hindurch zur ermöglichen, sind die beiden äußeren Durchgangsöffnungen in dem Verbindungssteg 9 als Langlöcher ausgebildet, so dass, wenn diese Schraubbefestigung 20 leicht gelöst werden, eine nachträgliche Ausrichtung um die Durchgangsöffnung 14 ermöglicht wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## BEZUGSZEICHENLISTE

| 1 | Montageklammer |
| 2 | Erster Klammerbügel |
| 3 | Zweiter Klammerbügel |
| 4 | Erstes Drehlager |
| 5 | Zweites Drehlager |
| 6 | Schwenkachse |
| 7 | Verriegelung - Schraube |
| 8 | Kräftepaar |
| 9 | Verbindungssteg |
| 10 | Feldgerät |
| 11 | Mantelfläche |
| 12 | Erste Durchgangsöffnung |
| 13 | Zweite Durchgangsöffnung |
| 14 | Durchgangsöffnung in 9 |
| 15 | Zapfen - Imbusschraube |
| 16 | Gehäuse |
| 17 | Prozessanschluss |
| 18 | Hornantenne |
| 19 | Befestigungsfläche |
| 20 | Schraubbefestigung |

## Patentansprüche

1. Montageklammer (1) zur Befestigung eines Feldgeräts (10) an einer Befestigungsfläche, umfassend:

   - einen ersten Klammerbügel (2) mit einem ersten Drehlager (4);
   - einen von dem ersten Klammerbügel (2) durch einen Abstand beabstandeten zweiten Klammerbügel (3) mit einem zweiten Drehlager (5); und
   - zumindest eine bewegliche Verriegelung (7) an einem der beiden Klammerbügel (2, 3);

   wobei die Drehlager (4, 5) ausgebildet sind, um ein in dem Abstand anordenbares Feldgerät (10) an zwei gegenüberliegenden Seiten gelenkig zu lagern, so dass das Feldgerät (10) um eine durch den Abstand hindurch verlaufende gedachte Achse (6) aus einer ersten Winkelstellung in eine zweite Winkelstellung schwenkbar ist;
   wobei die Verriegelung (7) ausgebildet ist, um mit dem Feldgerät (10) in Eingriff zu gelangen, um so einem Drehmoment des Feldgeräts (10) zu widerstehen, indem sie das Drehmoment in ein Kräftepaar umwandelt, welches über das zweite Drehlager (5) und die Verriegelung (7) selbst abtragbar ist,
   wobei die Verriegelung eine Schraube (7) umfasst, welche mit der Mantelfläche des Feldgeräts (10) in Eingriff bringbar ist, um die zweite Winkelstellung dauerhaft festzulegen,
   **dadurch gekennzeichnet, dass**
   in dem ersten Klammerbügel (2) eine Mehrzahl an ersten Durchgangsöffnungen (12) ausgebildet ist, welche allesamt um ein definiertes Bogenmaß auf einem Kreisbogen versetzt zueinander angeordnet sind, so dass das Feldgerät (10) unter definierten Winkelstellungen festlegbar ist, wenn die Verriegelung in alternativen Montagezuständen durch unterschiedliche der ersten Durchgangsöffnungen hindurch mit der Mantelfläche des Feldgeräts (10) in Eingriff steht;
wobei in dem zweiten Klammerbügel (3) zumindest eine zweite Durchgangsöffnung (13) mit einer kreisbogenförmigen Gestalt ausgebildet ist, durch welche hindurch die Schraube (7) mit der Mantelfläche des Feldgeräts (10) in Eingriff bringbar ist, um das Feldgerät (10) in der zweiten Winkelstellung mit dem zweiten Klammerbügel (3) zu verspannen.

2. Montageklammer gemäß Anspruch 1,
wobei in dem ersten Klammerbügel (2) zumindest eine erste Durchgangsöffnung (12) ausgebildet ist, durch welche hindurch die Schraube (7) mit der Mantelfläche des Feldgeräts (10) in Eingriff bringbar ist, um die zweite Winkelstellung dauerhaft festzulegen.

3. Montageklammer gemäß Anspruch 1 oder 2,
wobei die einzelnen ersten Durchgangsöffnungen (12) der Mehrzahl an ersten Durchgangsöffnungen um ein Bogenmaß von $n * \pi/8$ versetzt zueinander angeordnet sind wobei gilt:

$$n \in \mathbb{N}^{*}.$$

4. Montageklammer gemäß einem der voranstehenden Ansprüche,
wobei das erste Drehlager (4) und das zweite Drehlager (5) als Durchgangöffnungen in den beiden Klammerbügeln ausgebildet sind, in welchen das Feldgerät (10) über zwei Zapfen gelenkig lagerbar ist.

5. Feldgerät (10) mit einer Mantelfläche, wobei die Mantelfläche ausgebildet ist, um das Feldgerät mittels der Montageklammer (1) gemäß einem der Ansprüche 1 bis 4 an einer Befestigungsfläche zu befestigen.

6. Feldgerät gemäß Anspruch 5,
wobei das Feldgerät (10) in seiner Mantelfläche zumindest eine Öffnung aufweist, welche durch eine Schwenkbewegung des Feldgeräts (10) mit einer der ersten (12) Durchgangsöffnungen des ersten Klammerbügels (2) in Fluchtung bringbar ist, sodass die Schraube (7) anordenbar ist, um sich von einer der ersten Durchgangsöffnungen (12) in die Öffnung in der Mantelfläche zu erstrecken.

7. Feldgerät gemäß Anspruch 5,
wobei die Öffnung in der Mantelfläche während einer Schwenkbewegung des Feldgeräts (10) mit der zweiten Durchgangsöffnung (13) mit kreisbogenförmiger Gestalt des zweiten Klammerbügels (3) in Fluchtung bringbar ist, sodass die Schraube (7) anordenbar ist, um sich während der Schwenkbewegung von der kreisbogenförmiger Durchgangsöffnung in die Öffnung in der Mantelfläche zu erstrecken, um die Mantelfläche des Feldgeräts (10) mit dem zweiten Klammerbügel (3) zu verspannen.

8. Feldgerät (10) mit einer Montageklammer (1) zur Befestigung des Feldgeräts (10) gemäß Anspruch 1 an einer Befestigungsfläche, wobei die Montageklammer (1) umfasst:

- einen ersten Klammerbügel (2) mit einem ersten Drehlager (4);
- einen von dem ersten Klammerbügel (2) durch einen Abstand beabstandeten zweiten Klammerbügel (3) mit einem zweiten Drehlager; und
- zumindest eine bewegliche Verriegelung (7) an einem der beiden Klammerbügel (2, 3);

wobei das Feldgerät (10) in den Abstand eingepasst und an zwei gegenüberliegenden Seiten an den beiden Drehlager (4, 5) gelenkig gelagert ist, so dass das Feldgerät (10) um eine durch den Abstand hindurch verlaufende gedachte Achse (6) aus einer ersten Winkelstellung in eine zweite Winkelstellung schwenkbar ist;
wobei die Verriegelung (7) ausgebildet ist, um mit dem Feldgerät (10) in Eingriff zu gelangen, um so einem Drehmoment des Feldgeräts (10) zu widerstehen, indem sie das Drehmoment in ein Kräftepaar aufspaltet, welches über das zweite Drehlager (5) und die Verriegelung (7) selbst abgetragen wird, wobei die Verriegelung eine Schraube (7) umfasst, welche mit der Mantelfläche des Feldgeräts (10) in Eingriff bringbar ist, um die zweite Winkelstellung dauerhaft festzulegen,
**dadurch gekennzeichnet, dass**
in dem ersten Klammerbügel (2) eine Mehrzahl an ersten Durchgangsöffnungen (12) ausgebildet ist, welche allesamt um ein definiertes Bogenmaß auf einem Kreisbogen versetzt zueinander angeordnet sind, so dass das Feldgerät (10) unter definierten Winkelstellungen festlegbar ist, wenn die Verriegelung (7) in alternativen Montagezuständen durch unterschiedliche der ersten Durchgangsöffnung (12) hindurch mit der Mantelfläche des Feldgeräts (10) in Eingriff steht;
wobei in dem zweiten Klammerbügel (3) zumindest eine zweite Durchgangsöffnung (13) mit einer kreisbogenförmigen Gestalt ausgebildet ist, durch welche hindurch die Schraube (7) mit der Mantelfläche des Feldgeräts in Eingriff bringbar ist, um das Feldgerät (10) in der zweiten Winkelstellung mit dem zweiten Klammerbügel (3) zu verspannen.

9. Feldgerät gemäß Anspruch 8,
wobei die einzelnen ersten Durchgangsöffnungen (12) der Mehrzahl an ersten Durchgangsöffnungen um ein Bogenmaß von $n * \pi/8$ versetzt zueinander

angeordnet sind wobei gilt:

$$n \in \mathbb{N}^{*}.$$

10. Feldgerät gemäß Anspruch 8 oder 9, ferner umfassend:

- einen Verbindungssteg (9), welcher den ersten Klammerbügel (2) und den zweiten Klammerbügel (3) miteinander verbindet, und welcher parallel zu der durch den Abstand zwischen dem ersten Klammerbügel (2) und dem zweiten Klammerbügel (3) hindurch verlaufenden, gedachten Achse (6) verläuft, und welcher in seiner Mitte mit einer Durchgangsöffnung (14) zur Befestigung der Montageklammer (1) an einer Befestigungsfläche ausgestattet ist.

11. Feldgerät gemäß einem der voranstehenden Ansprüche,
wobei das erste Drehlager (4) und das zweite Drehlager (5) als Durchgangöffnungen in den beiden Klammerbügeln (2, 3) ausgebildet sind, in welchen das Feldgerät (1) über zwei Zapfen gelenkig gelagert ist.

**Claims**

1. A mounting bracket (1) for mounting a field device (10) to a mounting surface, comprising:

- a first bracket strap (2) comprising a first rotary bearing (4);
- a second bracket strap (3), spaced apart from the first bracket strap (2) by a distance, comprising a second rotary bearing (5); and
- at least one movable lock (7) on one of the two bracket straps (2, 3);

wherein the rotary bearings (4, 5) are designed to articulately mount a field device (10) that can be arranged at the distance on two opposing sides so that the field device (10) is rotatable about an imaginary axis (6) that extends through the distance from a first angle position to a second angle position;
wherein the lock (7) is designed to engage the field device (10) in order to in this way resist a torque of the field device (10), in that the lock converts the torque to a pair of forces which is removable by ways of the second rotary bearing (5) and the lock (7) itself, wherein the lock comprises a screw (7) that may be made to engage the jacket surface of the field device (10) in order to permanently determine the second angle position,
**characterized in that**
in the first bracket strap (2) a plurality of first through-openings (12) are designed, that are all arranged by a defined radian measure on a circular arc so as to be offset in relation to each other, so that the field device (10) is determinable at defined angle positions when in alternative installation states the lock engages the jacket surface of the field device (10) through different ones of the first through-openings; wherein in the second bracket strap (3) at least one second through-opening (13) is designed in a circular-arc shape, through which through-opening the screw (7) may be made to engage the jacket surface of the field device (10) in order to tighten the field device (10) in the second angle position to the second bracket strap (3).

2. The mounting bracket according to claim 1, wherein in the first bracket strap (2) at least one first through-opening (12) is designed, through which through-opening the screw (7) may be made to engage the jacket surface of the field device (10) in order to permanently determine the second angle position.

3. The mounting bracket according to claim 1 or 2, wherein the individual first through-openings (12) of the plurality of first through-openings are arranged so as to be offset in relation to each other by a radian measure of $n * \pi/ 8$ with:

$$n \in \mathbb{N}^{*}.$$

4. The mounting bracket according to any of the preceding claims,
wherein the first rotary bearing (4) and the second rotary bearing (5) are designed to be through-openings in the two bracket straps, in which the field device (10) may be articulately mounted by way of two pivots.

5. A field device (10) comprising a jacket surface, wherein the jacket surface is designed to mount the field device to a mounting surface by means of the mounting bracket (1) according to one of claims 1 to 4.

6. The field device according to claim 5, wherein the field device (10) comprises in its jacket surface at least one opening that by a rotary movement of the field device (10) may be made to be flush with one of the first through-openings (12) of the first bracket strap (2) so that the screw (7) may be arranged so that it extends from one of the first through-openings (12) into the opening in the jacket surface.

7. The field device of claim 5, wherein the opening in the jacket surface during a rotary movement of the field device (10) may be made to be flush with the second through-opening (13) with circular-arc shape of the second bracket strap (3) so that the screw (7) may be arranged such that during the rotary movement it extends from the circular-arc-shaped through-opening into the opening in the jacket surface so as to tighten the jacket surface of the field device (10) to the second bracket strap (3).

8. A field device (10) comprising a mounting bracket (1) for mounting the field device (10) according to claim 1 to a mounting surface, wherein the mounting bracket (1) comprises:

   - a first bracket strap (2) comprising a first rotary bearing (4);
   - a second bracket strap (3), spaced apart from the first bracket strap (2) by a distance, comprising a second rotary bearing; and
   - at least one movable lock (7) on one of the two bracket straps (2, 3);

   wherein a field device (10) is fitted into the distance and is articulately mounted on two opposing sides to the two rotary bearings (4, 5) so that the field device (10) is rotatable about an imaginary axis (6) that extends through the distance from a first angle position to a second angle position;
   wherein the lock (7) is designed to engage the field device (10) in order to in this way resist a torque of the field device (10), in that the lock converts the torque to a pair of forces which is removable by ways of the second rotary bearing (5) and the lock (7) itself, wherein the lock comprises a screw (7) that may be made to engage the jacket surface of the field device (10) in order to permanently determine the second angle position,
   **characterized in that**
   in the first bracket strap (2) a plurality of first through-openings (12) are designed, that are all arranged by a defined radian measure on a circular arc so as to be offset in relation to each other, so that the field device (10) is determinable at defined angle positions when in alternative installation states the lock engages the jacket surface of the field device (10) through different ones of the first through-openings (12);
   wherein in the second bracket strap (3) at least one second through-opening (13) is designed in a circular-arc shape, through which through-opening the screw (7) may be made to engage the jacket surface of the field device in order to tighten the field device (10) in the second angle position to the second bracket strap (3).

9. The field device according to claim 8, wherein the individual first through-openings (12) of the plurality of first through-openings are arranged so as to be offset in relation to each other by a radian measure of $n * \pi / 8$ with:

$$n \in \mathbb{N}^*.$$

10. The field device according to claim 8 or 9, further comprising:

    - a connecting web (9), which connects the first bracket strap (2) and the second bracket strap (3), and which extends parallel in relation to the imaginary axis (6) that extends through the distance between the first bracket strap (2) and the second bracket strap (3), and which is provided at its middle with a through-opening (14) for mounting the mounting bracket (1) to a mounting surface.

11. The field device according to any of the preceding claims,
    wherein the first rotary bearing (4) and the second rotary bearing (5) are designed to be through-openings in the two bracket straps (2, 3), in which the field device (1) may be articulately mounted by way of two pivots.

**Revendications**

1. Etrier de montage (1) destiné à fixer un appareil de terrain (10) sur une surface de fixation, comprenant :

   - une première branche d'étrier (2) dotée d'un premier palier tournant (4) ;
   - une deuxième branche d'étrier (3), écartée de la première branche d'étrier (2) par un écart, dotée d'un deuxième palier tournant (5) ; et
   - au moins un verrouillage mobile (7) sur une des deux branches d'étrier (2, 3) ;

   dans lequel les paliers tournants (4, 5) sont réalisés pour poser de manière articulée, à deux côtés opposés, un appareil de terrain (10) pouvant être agencé dans l'écart, de sorte que l'appareil de terrain (10) peut pivoter autour d'un axe (6) imaginé comme traversant l'écart, depuis une première position angulaire vers une deuxième position angulaire ;
   dans lequel le verrouillage (7) est réalisé pour être en prise avec l'appareil de terrain (10), pour résister ainsi à un moment de rotation de l'appareil de terrain (10), le moment de rotation se transformant en couple de forces, lequel peut être éliminé de lui-même par le biais du deuxième palier tournant (5) et du verrouillage (7),
   dans lequel le verrouillage comprend une vis (7), laquelle peut entrer en prise avec la surface enveloppante de l'appareil de terrain (10), afin d'établir de façon permanente la deuxième position angulaire, **caractérisé en ce qu'**une pluralité de premières ouvertures de passage (12) est réalisée dans la première branche d'étrier (2), lesquelles sont toutes agencées sur un arc de cercle décalées l'une par rapport à l'autre d'une mesure d'arc définie, de sorte que l'appareil de terrain (10) peut être fixé sous des positions angulaires définies, lorsque le verrouillage se trouve en prise avec la surface enveloppante de l'appareil de terrain (10) par différentes premières ouvertures de passage dans des états de montage alternatifs ;

dans lequel au moins une deuxième ouverture de passage (13) dotée d'une forme d'arc de cercle est réalisée dans la deuxième branche d'étrier (3), par laquelle la vis (7) peut entrer en prise avec la surface enveloppante de l'appareil de terrain (10), afin de serrer l'appareil de terrain (10) dans la deuxième position angulaire avec la deuxième branche d'étrier (3).

2. Etrier de montage selon la revendication 1, dans lequel au moins une première ouverture de passage (12) est réalisée, par laquelle la vis (7) peut entrer en prise avec la surface enveloppante de l'appareil de terrain (10) afin d'établir de façon permanente la deuxième position angulaire.

3. Etrier de montage selon la revendication 1 ou 2, dans lequel les premières ouvertures de passage (12) individuelles de la pluralité de premières ouvertures de passage sont agencées en décalage l'une par rapport à l'autre d'une mesure d'arc de $n * \pi / 8$, dans lequel $n \in$ IN*.

4. Etrier de montage selon l'une des revendications précédentes, dans lequel le premier palier tournant (4) et le deuxième palier tournant (5) sont réalisés comme ouvertures de passage dans les deux branches d'étrier, l'appareil de terrain (10) pouvant être posé de manière articulée dans ceux-ci par le biais de deux tenons.

5. Appareil de terrain (10) doté d'une surface enveloppante, dans lequel la surface enveloppante est réalisée pour fixer l'appareil de terrain à une surface de fixation au moyen de l'étrier de montage (1) selon l'une des revendications 1 à 4.

6. Appareil de terrain selon la revendication 5, dans lequel l'appareil de terrain (10) comporte au moins une ouverture dans sa surface enveloppante, laquelle peut être alignée avec une des premières ouvertures de passage (12) de la première branche d'étrier (2) par un mouvement de pivot de l'appareil de terrain (10), de sorte que la vis (7) peut être agencée de façon à s'étendre dans l'ouverture dans la surface enveloppante à partir d'une des premières ouvertures de passage (12).

7. Appareil de terrain selon la revendication 5, dans lequel l'ouverture dans la surface enveloppante peut être alignée avec la deuxième ouverture de passage (13) en forme d'arc de cercle de la deuxième branche d'étrier (3) pendant un mouvement de pivot de l'appareil de terrain (10), de sorte que la vis (7) peut être agencée de façon à s'étendre dans l'ouverture dans la surface enveloppante à partir de l'ouverture de passage en forme d'arc de cercle, afin de serrer la surface enveloppante de l'appareil de terrain (10) avec la deuxième branche d'étrier (3).

8. Appareil de terrain (10) doté d'un étrier de montage (1) destiné à fixer l'appareil de terrain (10) selon la revendication 1 à une surface de fixation, dans lequel l'étrier de montage (1) comprend :

- une première branche d'étrier (2) dotée d'un premier palier tournant (4) ;
- une deuxième branche d'étrier (3), écartée de la première branche d'étrier (2) par un écart, dotée d'un deuxième palier tournant ; et
- au moins un verrouillage mobile (7) sur une des deux branches d'étrier (2, 3) ;

dans lequel l'appareil de terrain (10) est adapté dans l'écart et posé de manière articulée, à deux côtés opposés, sur les deux paliers tournants (4, 5), de sorte que l'appareil de terrain (10) peut pivoter autour d'un axe (6) imaginé comme traversant l'écart, depuis une première position angulaire vers une deuxième position angulaire ;

dans lequel le verrouillage (7) est réalisé pour être en prise avec l'appareil de terrain (10), pour résister ainsi à un moment de rotation de l'appareil de terrain (10), le moment de rotation se scindant en couple de forces, lequel est éliminé de lui-même par le biais du deuxième palier tournant (5) et du verrouillage (7), dans lequel le verrouillage comprend une vis (7), laquelle peut entrer en prise avec la surface enveloppante de l'appareil de terrain (10), afin d'établir de façon permanente la deuxième position angulaire, **caractérisé en ce qu'**une pluralité de premières ouvertures de passage (12) est réalisée dans la première branche d'étrier (2), lesquelles sont toutes agencées sur un arc de cercle décalées l'une par rapport à l'autre d'une mesure d'arc définie, de sorte que l'appareil de terrain (10) peut être fixé sous des positions angulaires définies, lorsque le verrouillage (7) se trouve en prise avec la surface enveloppante de l'appareil de terrain (10) par différentes premières ouvertures de passage (12) dans des états de montage alternatifs ;

dans lequel au moins une deuxième ouverture de passage (13) dotée d'une forme d'arc de cercle est réalisée dans la deuxième branche d'étrier (3), par laquelle la vis (7) peut entrer en prise avec la surface enveloppante de l'appareil de terrain, afin de serrer l'appareil de terrain (10) dans la deuxième position angulaire avec la deuxième branche d'étrier (3).

9. Appareil de terrain selon la revendication 8, dans lequel les premières ouvertures de passage (12) individuelles de la pluralité de premières ouvertures de passage sont agencées en décalage l'une par rapport à l'autre d'une mesure d'arc de $n * \pi / 8$, dans lequel $n \in \text{IN}^*$.

10. Appareil de terrain selon la revendication 8 ou 9, comprenant :

   - un pont de connexion (9), lequel relie l'une à l'autre la première branche d'étrier (2) et la deuxième première branche d'étrier (3), et lequel est parallèle à l'axe (6) imaginé comme traversant l'écart entre la première branche d'étrier (2) et la deuxième première branche d'étrier (3), et lequel est équipé en son milieu d'une ouverture de passage (14) pour la fixation de l'étrier de montage (1) à une surface de fixation.

11. Appareil de terrain selon l'une des revendications précédentes, dans lequel le premier palier tournant (4) et le deuxième palier tournant (5) sont réalisés comme ouvertures de passage dans les deux branches d'étrier (2, 3), l'appareil de terrain (1) étant posé de manière articulée dans ceux-ci par le biais de deux tenons.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 60771055 B
- DE 102006005531
- US 6113047 A
- EP 1172600 A1